# EUROPEAN PATENT SPECIFICATION

(11) **EP 2 938 201 B1**
(45) Date of publication and mention of the grant of the patent: **20.03.2019**
(21) Application number: 13828872.5
(22) Date of filing: 23.12.2013
(51) Int. Cl.: A23C 19/032, A23C 19/068, A23C 9/127

(54) **FLAVOURING MIXTURE FOR PRODUCING MOZZARELLA**
AROMATISIERUNGSMISCHUNG ZUR HERSTELLUNG VON MOZZARELLA
MÉLANGE D'AROMATISANTS POUR FABRIQUER DE LA MOZZARELLA

(30) Priority: 28.12.2012 IT MI20122267
(43) Date of publication of application: 04.11.2015
(73) Proprietor: Granarolo S.P.A., 40127 Bologna (BO) (IT)
(72) Inventor: ORSI, Carla, 40127 Bologna (IT); ZAMBRINI, Angelo Vittorio, 40127 Bologna (IT); FRASSANITO, Fabio, 40127 Bologna (IT)
(74) Representative: Perani & Partners S.p.A.
(86) International application number: PCT/IB2013/061282
(87) International publication number: WO 2014/102711

(56) References cited:
- EP-A2- 0 346 884
- WO-A1-00/60950
- WO-A1-92/13462
- WO-A1-2007/055604
- US-A- 4 085 228
- APONTE M ET AL: "Short communication: Identification and technological characterization of yeast strains isolated from samples of water buffalo Mozzarella cheese", JOURNAL OF DAIRY SCIENCE, AMERICAN DAIRY SCIENCE ASSOCIATION, US, vol. 93, no. 6, 1 June 2010 (2010-06-01), pages 2358-2361, XP027058394, ISSN: 0022-0302 [retrieved on 2010-05-19] cited in the application
- Romano: "Yeasts from Water Buffalo Mozzarella, a traditional cheese of the Mediterranean area", International Journal of Food Microbiology, 19 September 2001 (2001-09-19), pages 45-51, XP055074996, Retrieved from the Internet: URL:http://www.sciencedirect.com/science?_ ob=MiamiImageURL&_cid=271249&_user=987766& _pii=S0168160501005712&_check=y&_origin=ar ticle&_zone=toolbar&_coverDate=19-Sep-2001 &view=c&originContentFamily=serial&wchp=dG LbVlV-zSkzk&md5=a5501de3d213777b97375dec57 b1808c&pid=1-s2.0-S0168160501005712-main.p df [retrieved on 2013-08-13] cited in the application
- ELISKASES-LECHNER F ET AL: "TILSITER OHNE SCHMIERE", DMZ. LEBENSMITTELINDUSTRIE UND MILCHWISSENSCHAFT, VOLKSWIRTSCHAFTLICHER VERLAG GMBH. MUNCHEN, DE, vol. 115, no. 4, 17 February 1994 (1994-02-17), pages 174-177, XP000428643, ISSN: 0938-9369 cited in the application

## Description

### FIELD OF THE INVENTION

The present invention relates to a flavouring mixture for the production of mozzarella, the process of production of said mozzarella using such flavouring mixture.

### STATE OF THE ART

Currently, the range of dairy products offers a wide variety of uses in the culinary field. Among the most used products, an important slice of the market is represented by mozzarella that can be consumed as such, or in hot dishes (for example pizza, pasta) or even in take-away food products such as, for example, sandwiches, small pizzas, piadinas, etc. As known, mozzarella is prepared through an industrial process comprising the following steps.

A starter culture (starter), that is lactic ferments with acidifying activity, developed in milk or whey, or in the form of freeze-dried or frozen concentrated ferments, is added to pasteurized milk. Calf or microbial rennet having a title of 1:10,000 is added to this mixture in an amount of about 25-30 ml/hl of total pasteurized milk, at a temperature between 32 and 36°C so that coagulation is achieved in 20-30 min.

The obtained curd then undergoes a series of mechanical operations so as to promote separation of the whey, that is, a first cut into cubes of considerable size, in the order of several cm³, followed by about 10-15 min rest, then a second cut to reach a markedly smaller size (of a walnut). The next manufacturing steps, instead, include extraction of a part of the whey and subsequent ripening of the curd under whey, according to the traditional method, for a time comprised between 3 and 6 hours. Alternatively, fermentation can also occur in the absence of whey, as long as the maintenance of suitable temperature conditions is guaranteed.

The latter step can be substituted by transfer of the curd, which at first has a pH around 6, on drainage tables, followed by cutting and revolving the curd blocks, an operation that is carried out at room temperature for 2-6 hours, until a final pH around 5.2-5.4 is obtained.

The following phases include stretching with hot water, optionally supplemented with table salt, until an even mass is obtained, at a temperature between 58 and 82°C, and shaping the mass into different shapes and sizes (globes, provolas, braids, etc), cooling in cold water, followed by optional salting in brine containing a salt concentration of 12-14% by weight, and eventually by packaging in storage liquid.

Such an industrial process guarantees a product suitable to be consumed as a fresh cheese or ready to be cooked, having good and consistent quality, then able to satisfy most consumers, while guaranteeing the highest hygienic and sanitary level. However, the average consumer would be even more satisfied and would be more incline to fidelize to the brand of the producer if this product displayed peculiar sensorial qualities able to make it as close as possible to an artisanal type product, which is generally characterized by typical and sometimes unmistakable taste and flavour. As the average consumer is generally more attracted by a mozzarella with a more prominent, natural and authentic taste, he/she will consequently tend to buy the product that satisfies him/her the most again.

In the dairy field, yeasts are generally recognized as undesirable contaminants and, as such, they fall in the category of the so-called anti-dairy microorganisms. Exception is made for some dairy processings, wherein the employment of yeasts is intended and pursued. In this case, yeasts are generally allowed to develop on the rind, being their proteolytic and deacidifying action desired there. In very particular cases, and specifically in the production of blue-veined cheeses, such as gorgonzola cheese, the action of yeasts is desired inside the cheese. The production of gas due to alcoholic fermentation of sugars present in the cheese, allows cavities to form where, following piercing with needles, typical moulds (*Penicillium roqueforti*) able to give the final product the characteristic colour, taste and flavour can develop.

For similar purposes, Eliskases-Lechner et al in: "Tilsiter ohne Schmiere" DMZ. Lebensmittelindustrie und Milkwissenschaft Volks" vol. 115, no. 4, February 17, 1994, p. 174-177 disclose a process wherein yeast is used to deacidify the rind of Tilsiter and then to promote the development of Corynebacteria.

Aponte M. et al in "Short Communication: identification and technological buffalo Mozzarella Cheese" Journal of Dairy Science, American Dairy Science Association vol. 93, no. 6, June 1, 2010, p. 2358-2361 and Romano in "Yeasts from Water Buffalo Mozzarella Cheese a traditional cheese of the Mediterranean area" International Journal of Food Microbiology, September 19, 2001 p. 45-51 report the results of microbiological investigations carried out on buffalo mozzarella, which emphasize the massive presence of yeasts in the final product as contaminants, and their respective characterization.

In fact, it is known that yeasts represent normal contaminants of the natural whey culture not only of mozzarella, but also of other cheeses such as grana, provolone etc. and, more generally, in the dairy environment. In the case of buffalo mozzarella, brines are likely to be the origin of the massive presence of yeasts in the final product. The authors of said scientific publications believe that the amount and type of yeasts may have an impact on the organoleptic characteristics of the final product.

As demonstrated in example 9, included in the present description, what said authors supposed is not confirmed. In fact, this example emphasizes that flavouring additives based on milk, partially fermented only with yeasts, do not allow to obtain the intended results in terms both of sapidity and acidity, even if the yeasts contained therein are present at concentrations four-fold higher than standard concentrations.

On the other hand, the acid alcoholic fermentation performed by lactic bacteria in association with yeasts is well known, as it is also reported in the following documents for preparing diet supplements or food based on completely fermented milk.

WO00/60950 discloses diet supplements obtained from completely dried kefir, that is completely fermented milk, in association with yeasts and lactic ferments, also supplemented with mineral salts.

WO2007055604 discloses a dairy product consisting of completely fermented longer duration milk obtained by adding non-fermenting yeasts or non-galactose or non-lactose fermenting yeasts, added simultaneously with lactic acid bacteria.

Eventually, EP346884 discloses completely fermented kefir-like milk produced from a starting material containing lactose and at least one sugar, submitting the lactose to fermentation by lactic bacteria and the sugar to alcoholic fermentation by a non-galactose or non-lactose fermenting yeast, until complete removal of both sugars.

WO9213462 discloses a novel lactic leaven and its use in manufacturing food products. It can be manufactured from lactose kefir grains incorporating a symbiosis of yeast and bacteria including Pichia membranaefaciens.

### SUMMARY OF THE INVENTION

The Applicant has now found that it is possible to give an industrially produced mozzarella a stronger and more "authentic" taste, which then gets closer to that of an artisanal-type mozzarella.

The present invention is represented by what is claimed in the claims attached to the present application.

In particular, the present invention relates to a partially fermented milk in a liquid form, obtained by adding an association of lactic ferments and yeasts thereto, and allowing them to develop for a time comprised between 6 and 18 hours, until pH values comprised between 5.80 and 6.10 are reached.

A further object of the present invention relates to the use of said partially fermented milk in a liquid form, as a flavouring mixture, in the process of industrial production of mozzarella.

In particular, a further object of the present invention is the use of said partially fermented milk, as a flavouring mixture. in an industrial process for preparing mozzarella comprising:
- adding said flavouring mixture to pasteurized milk destined to the production of mozzarella, in amounts between 1 and 3% by weight on the total volume of said pasteurized milk, before forming the curd,
- forming curd with microbial or calf rennet and according to one of the following 2 alternative methods:
   A) by lactic fermentation supported by Streptococcus thermophilus, added as starter culture or
   B) in a chemical enzymatic way by citric acid.

The starter of method A) or citric acid of method B) in this industrial process is added to said milk destined to the production of mozzarella previously or simultaneously to the addition of said flavouring mixture.

The Applicant has found that the mozzarella obtained with said industrial process:
I) has a time t=0 and at the expiry date a presence of yeasts below 100cfu/g of mozzarella;
II) has a taste similar to the artisanal type, when said industrial process involves the formation of curd according to the lactic fermentation A), it has a taste similar to the industrial mozzarella obtained by lactic acid fermentation, when the formation of curd occurs in the chemical enzymatic way B).

In fact, the Applicant has surprisingly found that, by properly selecting the type of both lactic ferments and yeasts, and properly dosing the respective amounts of these microorganisms, it is possible to obtain flavouring mixtures able to give mozzarella different tastes, that can be associated to those of artisanal-type mozzarella originating from different regions. For example, it is possible to obtain mozzarella with a more pronounced taste, which can be associated with the taste of mozzarella produced in the Agro Pontino, or it is possible to prepare mozzarella with a milder and milkier taste, more similar to that of mozzarella from Apulia.

### DETAILED DESCRIPTION OF THE INVENTION

For the purposes of the present invention, partially fermented milk means pasteurized milk that has undergone partial acidification until a pH comprised between 5.80 and 6.10, even more preferably between 6.00 and 6.10 was reached, and that consequently retains its own liquid state.

Hence, this type of milk is different from completely fermented milk that is in an essentially solid or semiliquid form displaying pH values lower than 5.0.

Lactic ferments present in the partially fermented milk object of the present invention, for use as a flavouring mixture in the preparation of mozzarella according to the present invention, are lactococci, and preferably are selected from *Lactococcus lactis* subsp. *lactis, Lactococcus lactis* subsp. *diacetylactis, Lactococcus lactis* subsp. *cremoris* and *Leuconostoc* spp. and combinations thereof.

Another class of lactic ferments present in the flavouring mixture according to the present invention is formed by mesophilic lactobacilli and more preferably are selected from *Lactobacillus plantarum, Lactobacillus casei, Lactobacillus rhamnosus, Lactobacillus pentosus, Lactobacillus paracasei* and combinations thereof.

Yeasts present in the mixture, instead, are generally selected based on their characteristics related to aminopeptidasic activity, alcoholic fermentation of sugars and ability to neutralize curd, and are preferably selected in the class formed by: *Kluyveromyces marxianus* subsp. *marxianus, Debaryomyces hansenii, Candida colliculosa, Kluyveromyces lactis, Saccharomyces cerevisiae* and combinations thereof.

The amount of lactic ferments to be used for preparing the flavouring mixture according to the present invention considerably ranges depending on the lactic ferments employed, and is generally comprised between 5 billion and 100 billion cfu/50 l of pasteurized milk. The amount of yeasts also considerably ranges, depending on the types of yeast employed and is generally comprised between 20 millions and 3.2 billion cfu/50 l of milk.

Preferably, an association of two or three species of lactobacilli or lactococci is employed.

Even more preferably, in this association, when an association of two lactobacilli or lactococci is employed, the ratio of the cell population of one species of lactobacilli or lactococci to the second species of lactobacilli or lactococci is comprised between 1:10 and 10:1. Even more preferably, it is comprised between 1:3 and 3:1. When an association of 3 lactococci is employed, the ratio of the cell populations of the respective species is preferably comprised between 1:2:3 and 3:2:1.

Yeasts are also employed in preparing the flavouring mixture according to the present invention. In this case, when only two species of yeasts are employed, the ratio between their cell populations is preferably comprised between 10:1 and 1:10, preferably between 3:1 and 1:3. When an association of three yeasts is present, the ratio between the respective cell populations is preferably comprised between: 1:2:3 and 3:2:1.

According to a preferred embodiment, in the phase of preparation of the partially fermented milk or flavouring mixture object of the present invention, lactic ferments and yeasts are added to pasteurized milk in the form of ready-to-use formulations, even more preferably in the form of a single formulation or single-dose bag.

The flavouring mixture according to the present invention is preferably developed at a temperature between 22 and 30°C, even more preferably between 24 and 26°C.

The time of development is preferably comprised between 16 and 18 hours, when lactic ferments are mesophilic lactobacilli.

For the purposes of the present invention, an "industrial process for the production of mozzarella" means a process carried out in the dairy industry, aimed at producing considerable amounts of such product, and able to guarantee the strictest and most severe hygienic and sanitary standards.

The industrial process for preparing mozzarella with a flavour similar to that of artisanal one, employing the flavouring mixture according to the present invention, includes that the formation of curd is carried out by adding the acidifying lactic fermentation starter *Streptococcus* and rennet, that is, forming the so-called lactic curd, or by adding citric acid and rennet and giving place to the formation of the so-called chemical-enzymatic curd.

Even if the employment of the flavouring mixture is preferred in the process of preparation by lactic fermentation, the employment of such flavouring mixture in the process that includes the formation of chemical-enzymatic curd, rather than obtaining mozzarella with a taste more similar to the artisanal type, advantageously gives it a taste similar to that of industrial mozzarella obtained with lactic curd.

In particular, the industrial process for the production of mozzarella including the formation of lactic curd and employing the flavouring mixture according to the present invention comprises the following steps:
a) adding the flavouring mixture to pasteurized milk destined to the production of mozzarella, said milk being optionally standardized for its own fat/protein ratio according to the good dairy practice well known to the experts in the field, and previously having *Streptococcus thermophilus* starter culture added thereto;
b) forming curd by adding calf or microbial rennet;
c) cutting the thus obtained curd, stirring, partial or total drainage of whey and separation of the curd;
d) ripening of the curd by fermentative acidification up to the desired pH, generally comprised between 5.2 and 5.4;
e) cutting the ripened curd in small pieces;
f) stretching the curd in hot water or also under steam;
g) shaping the thus obtained stretched curd into mozzarellas of specific shape;
h) cooling the mozzarellas;
i) optionally salting them by dipping into brine;
j) packaging, generally but not necessarily, in storage liquid.

Preferably, in step (a) of said process, the flavouring mixture is added in amounts preferably comprised between 1.2 and 1.6% by weight on the total volume of pasteurized milk destined to the production of mozzarella.

Concerning the following steps (c)-(h) of said process, they are carried out following well-established and conventional-type operating conditions, such as for example those previously described in the "State of the art" of the present description.

In case the industrial process for the production of mozzarella included the step of formation of the curd taking place in a chemical-enzymatic way, it particularly comprises the following steps:
a') adding the flavouring mixture to pasteurized milk destined to the production of mozzarella, said milk being optionally standardized for its own fat/protein ratio according to the good dairy practice well known to the experts in the field, and having citric acid previously or simultaneously added thereto;
b') forming curd by adding calf or microbial rennet;
c') cutting the thus obtained curd, stirring, total drainage of whey and separation of the curd;
d') cutting the ripened curd in small pieces
e') stretching the curd in hot water or also under steam;
f') shaping the thus obtained stretched curd into mozzarellas of specific shape;
g') cooling the mozzarellas;
h') optionally salting them by dipping in brine;
i') packaging, generally but not necessarily, in storage liquid.

Microbiological analyses performed on freshly prepared mozzarella (time t=0) employing the flavouring mixture of the invention, and on its expiry date (end of shelf life) have highlighted a presence of yeasts below 100 cfu/g of mozzarella.

These values are fully within the limits dictated by the regulation in force for the marketing of such products and are well far from the concentrations of yeasts present in artisanally produced buffalo mozzarella, and analyzed in the above cited papers by Aponte and Romano, from which it emerges that buffalo mozzarella can be contaminated by such yeasts, not completely removed in the production phase, and that therefore can remain in the finished marketed product. The following examples of preparation of mozzarella and respective evaluation tests for flavour and taste are reported for illustrative but not limiting purposes.

### Example 1 - Mozzarella 1:

### 1.1 Flavouring mixture preparation

### Powder formulation A formed by:

Mesophilic lactococci: *Lactococcus lactis* subsp. *lactis* (GLL23; GLL17), *Lactococcus lactis* subsp. *cremoris* (GLC16), total concentration 20 x 10⁹ cfu/50 l of milk.

Yeasts: *Kluyveromyces lactis* (GKL04) 2 x 10⁶ cfu/50 litres of milk, Debaryomyces *hansenii* (GDH 02) 4 x 10⁶ cfu/50 l of milk.

The formulation is dissolved in 50 l of pasteurized whole milk and allowed to develop for 4 h at 30°C until pH=6.00-6.10 is reached.

### 1.2 Process for the preparation of mozzarella and evaluation of its properties

In step (a) of the process of the invention the flavouring mixture obtained as described above was added in an amount of 1.6% by weight on the total volume of pasteurized milk to be processed.

Table 1 reports organoleptic characteristics of the product (look, structure, taste) the day after manufacturing (D+1), as evaluated by attributes by a panel of 10 judges according to a 6-score scale ranging from 0 to 5 where:
0=unacceptable-very bad; 1=unacceptable-poor; 2=acceptable-mediocre; 3=acceptable-good; 4=very good; 5=extremely good.

**TABLE 1 - PROPERTIES OF MOZZARELLA 1**

| Time of tasting | Look | Structure | Taste | Overall evaluation |
|---|---|---|---|---|
| D + 1 | 4 | 4 | 3 | 3 |

### Example 2 - Mozzarella 2:

### 2.1. Flavouring mixture preparation

### Powder formulation B formed by:

Mesophilic lactobacilli: *Lactobacillus paracasei* subsp. *paracasei* (GP02) and *Lactobacillus plantarum* (GP01), present in a 1:1 ratio for a total 100 x 10⁹ cfu/50 l of milk.

Yeasts: *Kluyveromyces lactis* (GKL04) 2 x 10⁶ cfu/50 l of milk, *Debaryomyces hansenii* (GDH02) 2 x 10⁶ cfu/50 l of milk.

Formulation B is added to 50 l of whole milk and allowed to develop for 16-18 h at 24-26°C until pH=5.9-6.10 is reached.

### 2.2 Process for preparing mozzarella and evaluation of the properties of mozzarella

### In step (a) of the process of the invention the flavouring mixture was added in an amount of 1% by weight on the total weight of pasteurized milk to be processed.

In the following table 2 organoleptic characteristics of the product (look, structure, taste) are reported, as evaluated by the same panel of judges of the previous example, the day after its manufacturing and scored according to the attribute scale, which interpretation is reported in example 1.

**Table 2 - PROPERTIES OF MOZZARELLA 2**

| Time of tasting | Look | Structure | Taste | Overall evaluation |
|---|---|---|---|---|
| D + 1 | 4 | 4 | 4 | 4 |

In this case, a mozzarella, which characteristic flavour is judged as having very good intensity is obtained.

### Example 3 - Mozzarella 3:

### 3.1. Flavouring mixture preparation

### Powder formulation C formed by:

Mesophilic lactococci: *Lactococcus lactis* subsp. *lactis* (GLL23; GLL17); *Lactococcus lactis* subsp. *cremoris* (GLC16); *Lactococcus lactis* subsp. *diacetylactis* (GLD13) 20 x 10⁹ cfu/50 l of milk.

Yeasts: *Candida colliculosa* (GCC05) 0.4 x 10⁸ cfu/50 l of milk, *Kluyveromyces marxianus* subsp. *marxianus* (GKM03) 1.4 x 10⁹ cfu/50 l of milk, *Debaryomyces hansenii* (GDH01) 1.6 x 10⁹ cfu/50 l of milk.

Formulation C is added to 50 1 of whole milk and allowed to develop for 6 h at 24-25°C until pH=6.00-6.10 is reached.

### 3.2 Process for the preparation of mozzarella and evaluation of its properties

In step (a) of the process of the invention the flavouring mixture was added in an amount of 1% by weight on the total weight of pasteurized milk.

In the following table 3 the organoleptic characteristics of the product (look, structure, taste) are reported, as evaluated by the same panel of judges of the previous example, the day after its manufacturing and scored according to the attribute scale, which interpretation is reported in example 1.

**TABLE 3 - PROPERTIES OF MOZZARELLA 3**

| Time of tasting | Look | Structure | Taste | Overall evaluation |
|---|---|---|---|---|
| D + 1 | 4 | 4 | 5 | 5 |

### Example 4 - Mozzarella 4:

### 4.1 Flavouring mixture preparation

### Powder formulation D formed by:

Mesophilic lactobacilli in 1:1 ratio *Lactobacillus paracasei* subsp. *paracasei* (GP02) and *Lactobacillus plantarum* (GP01), total concentration 100 x 10⁹ cfu/50 l of milk.

Yeasts: *Candida colliculosa* (GCC05) 0.4 x 10⁸ cfu/50 l of milk, *Kluyveromyces marxianus* subsp. *marxianus*(*GKM03*) 1.4 x 10⁹ cfu/50 l of milk, *Debaryomyces hansenii* (GDH01) 1.6 x 10⁹ cfu/50 l of milk.

Formulation D is added to 50 l of pasteurized milk and allowed to develop for 16-18 h at 24-25°C until pH=6.00-6.10 is reached.

### 4.2. Preparation and evaluation of mozzarella

In step (a) of the process of the invention the flavouring mixture was added in an amount of 1% by weight on the total weight of pasteurized milk.

In the following table 4, characteristics of the product (look, structure, taste) are reported, as evaluated by the same panel of judges of the previous example the day after its manufacturing and scored according to the attribute scale which interpretation is reported in the previous examples.

**TABLE 4 - PROPERTIES OF MOZZARELLA 4**

| Time of tasting | Look | Structure | Taste | Overall evaluation |
|---|---|---|---|---|
| D + 1 | 4 | 3 | 4 | 4 |

### Example 5 - Mozzarella 4A:

Mozzarella is prepared according to the methods used for preparing mozzarella 4, with the only difference of adding the flavouring mixture prepared as described in 4.1 in an amount equal to 1.2% by weight on the total weight of pasteurized milk.

In the following table 4A, properties of mozzarella, as evaluated by the same panel of judges of the previous example are reported the day after its manufacturing and scored according to the attribute scale which interpretation is reported in example 1.

**TABLE 4A - PROPERTIES OF MOZZARELLA 4A**

| Time of tasting | Look | Structure | Taste | Overall evaluation |
|---|---|---|---|---|
| D + 1 | 5 | 4 | 5 | 5 |

Flavour is present and prominent.

### Example 6 - Mozzarellas 5-10 and 13

The following mozzarellas were prepared employing flavouring mixtures prepared in the following way: each of the formulations (D5, D6, D8, D9, D13, D13*) reported below are added to 50 1 of pasteurized whole milk and the mixture is allowed to develop at 24°C for 16-18 h until pH=6.00-6.10 is reached

### Formulation D5 (mozzarella 5)

Mesophilic lactobacilli in 1:1 ratio, *Lactobacillus paracasei* subsp. *paracasei* (GP02) and *Lactobacillus plantarum* (GP01) with a total concentration of 100 x 10⁹ cfu/50 l of milk.

Yeasts: *Candida colliculosa* (GCC05) 0.4 x 10⁷ cfu/50 l of milk, *Kluyveromyces marxianus* subsp. *marxianus* (GKM03) 1.4 x 10⁹ cfu/50 l of milk, *Debaryomyces hansenii* (GDH01) 1.6 x 10⁹ cfu/50 l of milk.

### Formulation D6 (mozzarella 6)

Mesophilic lactobacilli in 1:1 ratio, *Lactobacillus paracasei* subsp. *paracasei* (GP02) and *Lactobacillus plantarum* (GP01) with a total concentration of 100 x 10⁹ cfu/50 l of milk.

Yeasts: *Candida colliculosa* (GCC05) 0.8 x 10⁸ cfu/50 l of milk, *Kluyveromyces marxianus* subsp. *marxianus* (GKM03) 1.4 x 10⁹ cfu/50 l of milk, *Debaryomyces hansenii* (GDH01) 1.6 x 10⁹ cfu/50 l of milk.

### Formulation D8 (mozzarella 7)

Mesophilic lactobacilli in 1:1 ratio, *Lactobacillus paracasei* subsp. *paracasei* (GP02) and *Lactobacillus plantarum* (GP01) with a total concentration of 100 x 10⁹ cfu/50 l of milk.

Yeasts: *Candida colliculosa* (GCC05) 0.8 x 10⁸ cfu/50 l of milk, *Kluyveromyces marxianus* subsp. *marxianus* (GKM03) 2.8 x 10⁹ cfu/50 l of milk, *Debaryomyces hansenii* (GDH01) 1.6 x 10⁹ cfu/50 l of milk.

### Formulation D9 (mozzarella 8)

Mesophilic lactobacilli in 1:1 ratio, *Lactobacillus paracasei* subsp. *paracasei* (GP02) and *Lactobacillus plantarum* (GP01) with a total concentration 100 x 10⁹ cfu/50 l of milk.

Yeasts: *Candida colliculosa* (GCC05) 0.4 x 10⁸, *Kluyveromyces marxianus* subsp. *marxianus* (GKM03) 2.8 x 10⁹ cfu/50 l of milk, *Debaryomyces hansenii* (GDH01) 3.2 x 10⁹ cfu/50 l of milk.

### Formulation D13 (mozzarella 9)

Mesophilic lactobacilli in 1:1 ratio, *Lactobacillus paracasei* subsp. *paracasei* (GP02) and *Lactobacillus plantarum* (GP01) with a total concentration of 100 x 10⁹ cfu/50 l of milk.

Yeasts: *Kluyveromyces marxianus* subsp. *marxianus* (GKM03) 5.6 x 10⁹ cfu/50 l of milk, *Debaryomyces hansenii* (GDH01) 4.8 x 10⁹ cfu/50 l of milk.

### Formulation D13*(Mozzarella 10)

Mesophilic lactobacilli in 1:1 ratio, *Lactobacillus paracasei* subsp. *paracasei* (GP02) and *Lactobacillus plantarum* (GP01) with a total concentration of 100 x 10⁹ cfu/50 l of milk.

Yeasts: *Kluyveromyces* marxianus subsp. marxianus (GKM03) 5.6 x 10⁹ cfu/50 l of milk.

### Example 7 - Preparation of mozzarellas 11 and 12

Mozzarellas 11 and 12 are prepared employing the flavouring mixtures prepared according to the following experimental conditions, respectively. Formulations A2 and C2 reported below are added to 50 l of pasteurized whole milk, the resulting mixture is allowed to develop at 24°C for 6 h, until pH= 6.00-6.10 is reached.

### Formulation C2 (mozzarella 11)

Mesophilic lactococci in 1:1:1 ratio, *Lactococcus lactis* subsp. *lactis* (GLL23; GLL17); *Lactococcus lactis* subsp. *cremoris* (GLC16), *Lactococcus lactis* subsp. *diacetylactis* (GLD13) 5 x 10⁹ cfu/50 l of milk.

Yeasts: *Kluyveromyces* marxianus subsp. marxianus (GKM03) 5.6 x 10⁹ cfu/50 l of milk.

### Formulation A2 (mozzarella 12)

Mesophilic lactococci in 1:1:1 ratio, *Lactococcus lactis* subsp. *lactis* (GLL23; GLL17); *Lactococcus lactis* subsp. *cremoris* (GLC16), *Lactococcus lactis* subsp. *diacetylactis* (GLD13): 5 x 10⁹ cfu/50 l of milk.

Yeasts: *Kluyveromyces lactis* (GKL04) 1.6 x 10⁹ cfu/50 l of milk, *Debaryomyces hansenii* (GDH02) 0.4 x 10⁸ cfu/50 l of milk.

In the following tables 5 and 6, properties of mozzarellas 11 and 12 are reported, as evaluated by the same panel of judges of the previous example the day after their manufacturing, and scored according to the attribute scale which interpretation is reported in example 1.

**TABLE 5 - PROPERTIES OF MOZZARELLA 11**

| Time of tasting | Look | Structure | Taste | Overall evaluation |
|---|---|---|---|---|
| D + 1 | 4 | 3 | 4 | 4 |

**TABLE 6 - PROPERTIES OF MOZZARELLA 12**

| Time of tasting | Look | Structure | Taste | Overall evaluation |
|---|---|---|---|---|
| D + 1 | 4 | 3 | 3 | 3 |

### Example 8 - Subjective and objective sensorial analyses

A thorough study was carried out using both a sample of average consumers and a panel of judges trained to evaluate dairy industry products as well, in order to verify if mozzarellas according to the present invention confirmed the results in terms of look, structure and taste of the preliminary studies reported in the previous examples.

### 8.1 Samples examined

In this study, 3 types of 125 g-mozzarella were analysed that will be defined as follows:
- Mozzarella from the market
- Prototype 1 obtained as described in example 1 with type A formulation
- Prototype 2 obtained as described in example 6 (mozzarella 10 obtained with formulation D13*)

### 8.2 SUBJECTIVE SENSORIAL ANALYSIS

### 8.2.1 Structure of the test and recording design

A blind test was carried out in specific centres with a sample of consumers so composed:
- 100 women consumers between 25 and 55 years of age;
- users of "traditional" cow mozzarella sold in supermarkets, at least twice in the last 3 months.

Interviewed women had gone to the centres where the test was taking place and had tasted the 3 samples in sequential monadic, according to a balanced rotation design.

### 8.2.2 Evaluation of samples

For each sample, women consumers expressed an overall liking score (scale 1-9) for the following properties: look, taste, softness, juiciness in the mouth.

Interviewed women were also asked to express an opinion on the suitability of the intensity of the following properties:
colour, taste, milky taste, compactness, juiciness, amount of milk, acidity and sapidity/degree of salt (scale 1-9). The propensity to buy was also recorded (scale 1-5).

### 8.3 OBJECTIVE SENSORIAL ANALYSIS

Tested products were subjected to evaluation by a panel of 8 trained judges that specialize in analysis of dairy products.

For each product, intensity of the following typical descriptive qualities and of those concerning more general properties was measured on a 0-10 scale in 3 measurement sessions, that is: look, smell and flavour, taste, compactness, previously defined during appropriate preliminary sessions.

In fact, descriptive qualities concerning the look are inside colour, outside colour, surface brightness, surface smoothness and visual fibrousness.

Descriptive qualities defining smell and flavour are overall smell, butter flavour, cream flavour, milky flavour and whey flavour.

Descriptive qualities regarding taste are overall taste, and in particular salty, bitter, acid tastes.

Eventually, qualities defining compactness are hardness at cutting, cohesivity, flexibility, flaking, juiciness.

### 8.4 Results

### 8.4.1 Subjective sensorial analysis

In the following table 5 results are reported in terms of overall liking, and of results concerning look, taste, softness, juiciness in the mouth of each of the samples tested, following the subjective sensorial analysis described above.

**TABLE 5**

| | Prototype 1 | Mozzarella from the market | Prototype 2 | *LSD |
|---|---|---|---|---|
| **Overall liking** | **6.2** | **5.4** | **6.6** | **0.5** |
| Look | 6.8 | 5.4 | 6.7 | 0.5 |
| Taste | 5.6 | 5.4 | 6.4 | 0.6 |
| Softness | 6.5 | 3.9 | 6.6 | 0.6 |
| Juiciness in the mouth | 5.6 | 4.2 | 6.3 | 0.6 |

| | | | | |
|---|---|---|---|---|
| LSD 95% = least significant difference (P=95%) | | | | |

In table 6 mean scores of suitability scores are reported, classified according to scales ranging from 1 to 9 for each property and so that:
Colour: 1 = too light, 9= too dark; Taste/milky taste 1 = very weak, 9 = too intense; Compactness 1 = too soft, 9 = too hard; Juiciness in the mouth: 1 = very little juice, 9 = too juicy; Amount of milk seeping: 1 = too little, 9 = too much; Acidity: 1 = very little acidity, 9 = too acid.

**Table 6 - Suitability scores**

| | Prototype 1 | Mozzarella from the market | Prototype 2 | *LSD |
|---|---|---|---|---|
| Colour | 5.2 | 5.3 | 5.3 | 0.4 |
| Amount of milk | **3.8** | **2.2** | **3.9** | 0.5 |
| Taste | **4.1** | **4.0** | 4.8 | 0.5 |
| Milky taste | **4.0** | **3.3** | **4.3** | **0.5** |
| Acidity | 5.0 | **4.6** | 5.2 | 0.4 |
| Juiciness | **4.3** | **3.1** | **4.2** | 0.4 |

| | | | | |
|---|---|---|---|---|
| LSD 95% = least significant difference (P=95%) | | | | |

Values in bold are significantly lower or higher than the suitability value.

In table 7 data regarding propensity to buy are reported.

| | Mean scores | I would certainly/probably buy it | I would certainly buy it |
|---|---|---|---|
| Prototype 1 | **3.3** | 47% | 21% |
| Mozzarella from the market | 2.8 | 32% | 5% |
| Prototype 2 | **3.6** | 59% | 24% |
| LSD 95% | 0.3 | | |

| | | | |
|---|---|---|---|
| * LSD 95% = least significant difference (P=95%) | | | |

### 8.4.2 Objective sensorial analysis

In the following table 8, results of the evaluation are reported, as expressed by the panel of external judges on a scale ranging from 1 to 9, wherein 1 represents the lowest value for the test properties while 9 represents the highest value for the same properties.

**TABLE 8. Sensorial profiles of the products**

| | Prototype 1 | Mozzarella from the market | Prototype 2 | *LSD |
|---|---|---|---|---|
| Outside colour | 3.9 | 5.5 | 1.9 | 2.5 |
| Surface brightness | 7.3 | 3.8 | 7.4 | 2.0 |
| Surface smoothness | 6.1 | 3.3 | 8.0 | 2.3 |
| Compactness | 5.3 | **6.8** | 5.3 | 0.4 |
| Visual flexibility | 5.1 | 5.4 | 5.0 | 1.7 |
| Hardness at cutting | 2.8 | 7.1 | 4.9 | 2.4 |
| Inside colour | 4.7 | 8.5 | 2.1 | 2.0 |
| Visual fibrousness | 5.3 | 1.9 | 4.5 | 2.5 |
| Overall smell | 2.8 | 4.9 | 4.6 | 2.6 |
| Overall taste | 3.1 | 2.2 | 6.4 | 2.0 |
| Sweet | 6.5 | 7.8 | 3.3 | 2.4 |
| Salty | 1.8 | 1.2 | 5.4 | 1.5 |
| Bitter | 4.5 | 2.2 | 3.9 | 2.5 |
| Acid | 4.5 | 1.6 | 7.5 | 2.2 |
| Butter flavour | 3.6 | 6.5 | 3.3 | 2.6 |
| Milky flavour | 5.3 | 4.5 | 6.5 | 2.6 |
| Cream flavour | 4.9 | 6.4 | 4.3 | 2.5 |
| Whey flavour | 5.5 | 2.9 | 6.3 | 2.5 |
| Sapidity/salty taste | **4.3** | **4.2** | 4.9 | 0.4 |
| Cohesivity | 2.7 | 8.9 | 4.0 | 2.1 |
| Flaking | 4.6 | 4.6 | 4.4 | 2.6 |
| Juiciness | 6.5 | 1.4 | 6.8 | 2.2 |

As it can be inferred from both subjective and objective sensorial analyses, the prototypes according to the invention show significantly improved flavour and taste in comparison with the marketed product that was not prepared using the flavouring mixture according to the present invention, in addition, prototype 2 is also the one giving better results non only in terms of taste, but also of colour, smoothness and cohesivity.

### Example 9

Data obtained from 50 l of pasteurized milk fermented in the presence of the following yeasts only are reported hereinafter:
*Candida colliculosa, Kluyveromyces marxianus* subsp. *marxianus, Debaryomyces hansenii.*

### Example 9 -A-

### Flavouring yeasts for mozzarella

Activities performed in high quality, pasteurized, marketed whole milk
pH/acidity of the milk = 6.79/14°D

| **Standard concentration** | | **Four-fold concentration** | |
|---|---|---|---|
| **yeasts** | | **yeasts** | |
| *Candida colliculosa* | | *Candida colliculosa* | |
| T°C=24°C | | T°C=24°C | |

| **Time (h)** | **pH** | **Time (h)** | **pH** |
|---|---|---|---|
| 0 | 6.79 | 0 | 6.79 |
| 1 | 6.69 | 1 | 6.67 |
| 2 | 6.68 | 2 | 6.65 |
| 3 | 6.67 | 3 | 6.64 |
| 4 | 6.67 | 4 | 6.64 |
| 5 | 6.66 | 5 | 6.63 |
| 6 | 6.66 | 6 | 6.63 |
| 7 | 6.66 | 7 | 6.62 |
| 8 | 6.66 | 8 | 6.62 |
| 9 | 6.65 | 9 | 6.62 |
| 10 | 6.65 | 10 | 6.62 |
| 11 | 6.65 | 11 | 6.62 |
| 12 | 6.65 | 12 | 6.61 |
| 13 | 6.65 | 13 | 6.61 |
| 14 | 6.65 | 14 | 6.61 |
| 15 | 6.65 | 15 | 6.61 |
| 16 | 6.65 | 16 | 6.61 |
| 17 | 6.64 | 17 | 6.60 |
| 18 | 6.64 | 18 | 6.60 |
| 19 | 6.64 | 19 | 6.59 |
| 20 | 6.64 | 20 | 6.59 |

As it can be observed, not even at a four-fold concentration and after 20 h, the pH of such mixture reaches the pH required to give the required acidity.

Mozzarella produced using milk wherein said yeast was allowed to develop as a flavouring mixture was also analyzed by the same panel of 10 judges that examined mozzarellas obtained with the flavouring mixtures of examples 1-7, only concerning the taste the day after manufacturing. The evaluation of such product was 0, since the mozzarella shows a taste that is almost identical to that of those obtained in the absence of flavouring mixture.

### Example 9 -B- Debaryomyces hansenii

Activities performed in pasteurized, marketed whole milk
pH/acidity of the milk = 6.72/16°D

| **Standard concentration** | | **four-fold concentration** | |
|---|---|---|---|
| **yeasts** | | **yeasts** | |
| *Debaryomyces hansenii* | | *Debaryomyces hansenii* | |
| T°C=24°C | | T°C=24°C | |

| **Time (h)** | **pH** | **Time (h)** | **pH** |
|---|---|---|---|
| 0 | 6.72 | 0 | 6.72 |
| 1 | 6.68 | 1 | 6.64 |
| 2 | 6.67 | 2 | 6.64 |
| 3 | 6.67 | 3 | 6.64 |
| 4 | 6.67 | 4 | 6.64 |
| 5 | 6.66 | 5 | 6.64 |
| 6 | 6.66 | 6 | 6.64 |
| 7 | 6.66 | 7 | 6.63 |
| 8 | 6.66 | 8 | 6.63 |
| 9 | 6.66 | 9 | 6.63 |
| 10 | 6.66 | 10 | 6.63 |
| 11 | 6.66 | 11 | 6.63 |
| 12 | 6.65 | 12 | 6.63 |
| 13 | 6.65 | 13 | 6.62 |
| 14 | 6.65 | 14 | 6.62 |
| 15 | 6.64 | 15 | 6.62 |
| 16 | 6.63 | 16 | 6.61 |
| 17 | 6.63 | 17 | 6.60 |
| 18 | 6.62 | 18 | 6.59 |
| 19 | 6.60 | 19 | 6.56 |
| 20 | 6.57 | 20 | 6.51 |

Also in this case the flavouring mixture does not reach the desired values of acidity even employing a four-fold concentration of yeast and after 20 hours.

Mozzarella produced with the flavouring mixture containing said yeast only, the day after its production was evaluated by the same panel of 10 judges of examples 1-7 only concerning the taste. Also in this case, the evaluation of such product was 0, since the mozzarella shows a taste almost identical to that of those obtained in the absence of such flavouring mixture.

### Example 9 -C- Kluyveromyces marxianus subsp. marxianus

| **Standard concentration** | | **four-fold concentration** | |
|---|---|---|---|
| **yeasts** | | **yeasts** | |
| *Kluyveromyces* marxianus | | *Kluyveromyces* marxianus | |
| subsp. *marx.* | | subsp. *marx.* | |
| T°C=24°C | | T°C=24°C | |

| **Time (h)** | **pH** | **Time (h)** | **pH** |
|---|---|---|---|
| 0 | 6.72 | 0 | 6.72 |
| 1 | 6.65 | 1 | 6.67 |
| 2 | 6.64 | 2 | 6.66 |
| 3 | 6.64 | 3 | 6.66 |
| 4 | 6.63 | 4 | 6.65 |
| 5 | 6.63 | 5 | 6.65 |
| 6 | 6.63 | 6 | 6.64 |
| 7 | 6.63 | 7 | 6.64 |
| 8 | 6.62 | 8 | 6.64 |
| 9 | 6.62 | 9 | 6.63 |
| 10 | 6.62 | 10 | 6.63 |
| 11 | 6.62 | 11 | 6.63 |
| 12 | 6.62 | 12 | 6.62 |
| 13 | 6.61 | 13 | 6.62 |
| 14 | 6.61 | 14 | 6.61 |
| 15 | 6.60 | 15 | 6.60 |
| 16 | 6.60 | 16 | 6.58 |
| 17 | 6.59 | 17 | 6.56 |
| 18 | 6.58 | 18 | 6.54 |
| 19 | 6.56 | 19 | 6.51 |
| 20 | 6.54 | 20 | 6.48 |

As it results from the above data, only after 20 h and with a concentration four-fold higher than the standard, a flavouring mixture with a pH slightly lower than the maximum acceptable value (6.50) is obtained.

In any case, also mozzarellas produced with said flavouring mixture were given a taste value = 0, since they showed a taste almost identical to that of those obtained in the absence of flavouring mixture.

## Claims

1. Partially fermented pasteurized milk in a liquid form obtained by addition of an association of lactic acid bacteria selected from mesophilic lactococci and/or lactobacilli in amounts ranging from 5 billion and 100 billion cfu/ 50 l of pasteurized milk, and yeasts in amounts of from 20 millions and 3.2 billion/50 l of pasteurized milk which are developed until pH values comprised between 5.80 and 6.10 are reached.

2. Partially fermented pasteurized milk in a liquid form according to claim 1, wherein said pH is comprised between 6.00 and 6.10.

3. Partially fermented pasteurized milk in a liquid form according to any one of claims 1-2, wherein the mesophilic lactobacilli are selected in the group consisting of: *Lactobacillus plantarum, Lactobacillus casei; Lactobacillus rhamnosus; Lactobacillus pentosus; Lactobacillus paracasei* and combinations thereof.

4. Partially fermented pasteurized milk in a liquid form according to any one of claims 1-2, wherein the mesophilic lactococci are selected in the group consisting of: *Lactococcus lactis* subsp. *lactis; Lactococcus lactis* subsp. *diacetylactis; Lactococcus lactis* subsp. *cremoris;* and combinations thereof.

5. Partially fermented pasteurized milk in a liquid form according to any one of claims 1-4, wherein the yeasts are selected in the group consisting of: *Kluyveromyces marxianus* subsp. *marxianus, Debaryomyces hansenii, Candida colliculosa, Kluyveromyces lactis; Saccharomyces cerevisiae.*

6. Use of the partially fermented milk according to any one of claims 1-6, as a flavouring mixture, wherein:
i) said industrial process for preparing mozzarella comprises:
• adding said flavouring mixture to pasteurized milk destined to the production of mozzarella, in amounts between 1 and 3% by weight on the total volume of said pasteurized milk, before forming the curd,
• forming curd with microbial or calf rennet and according to one of the following 2 alternative methods:
A) by lactic fermentation supported by *Streptococcus thermophilus,* added as starter culture or
B) in a chemical enzymatic way by citric acid,
wherein said starter of method A) or citric acid of method B) is added to said milk previously or simultaneously to the addition of said flavouring mixture,
ii) wherein the mozzarella obtained with said industrial process:
I) has at time t=0 and at the expiry date a presence of yeasts below 100cfu/g of mozzarella;
II) has a taste similar to the artisanal type, when said industrial process involves the formation of curd according to the lactic fermentation A), it has a taste similar to the industrial mozzarella obtained by lactic acid fermentation, when the formation of curd occurs in the chemical enzymatic way B).

7. Use according to claim 6, wherein, when the curd is obtained by lactic fermentation A), the process of preparation of mozzarella comprises the following steps:
a) adding the flavouring mixture to pasteurized milk destined to the production of mozzarella, said milk being optionally standardized for its own fat/protein ratio according to the good dairy practice well known to the experts in the field, and previously having *Streptococcus thermophilus* starter culture added thereto;
b) forming curd by adding calf or microbial rennet;
c) cutting the thus obtained curd, stirring, partial or total drainage of whey and separation of the curd;
d) ripening of the curd, by fermentative acidification up to the desired pH generally comprised between 5.2 and 5.4;
e) cutting the ripened curd in small pieces
f) stretching the curd in hot water or also under steam;
g) shaping the thus obtained stretched curd into mozzarellas of specific shape;
h) cooling the mozzarellas;
i) optionally salting them by dipping in brine;
j) packaging, generally but not necessarily in storage liquid.

8. Use according to claim 7, wherein in step (a) the flavouring mixture is added at concentrations between 1.2 and 1.6% by weight/total volume of pasteurized milk destined to the production of mozzarella.

9. Use according to claim 6, wherein, when the curd is obtained in chemical enzymatic way B), the process of production of mozzarella comprises the following steps:
a') adding the flavouring mixture to pasteurized milk, said milk being optionally standardized for its own fat/protein ratio according to the good dairy practice well known to the experts in the field and having citric acid previously added thereto;
b') forming curd by adding calf or microbial rennet;
c') cutting the thus obtained curd, stirring, total drainage of whey and separation of the curd;
d') cutting the ripened curd in small pieces
e') stretching the curd in hot water or also under steam;
f') shaping the thus obtained stretched curd into mozzarellas of specific shape;
g') cooling the mozzarellas;
h') optionally salting them by dipping in brine;
i') packaging, generally but not necessarily in storage liquid.

## Patentansprüche

1. Teilfermentierte pasteurisierte Milch in flüssiger Form, gewonnen durch Zugabe einer Verbindung von Milchsäurebakterien, ausgewählt aus mesophilen Laktokokken und/oder Laktobazillen in Mengen im Bereich von 5 Milliarden und 100 Milliarden Kubikfuß(cfu)/50 l pasteurisierter Milch, und Hefen in Mengen im Bereich von 20 Millionen und 3,2 Milliarden/50 l pasteurisierter Milch, die entwickelt werden, bis pH-Werte zwischen 5,80 und 6,10 erreicht sind.

2. Teilfermentierte pasteurisierte Milch in flüssiger Form nach Anspruch 1, wobei der pH-Wert zwischen 6,00 und 6,10 liegt.

3. Teilfermentierte pasteurisierte Milch in flüssiger Form nach einem der Ansprüche 1 bis 2, wobei die mesophilen Laktobazillen ausgewählt sind aus der Gruppe bestehend aus *Lactobacillus plantarum, Lactobacillus casei, Lactobacillus rhamnosus, Lactobacillus pentosus, Lactobacillus paracasei* und Kombinationen davon.

4. Teilfermentierte pasteurisierte Milch in flüssiger Form nach einem der Ansprüche 1 bis 2, wobei die mesophilen Laktokokken ausgewählt sind aus der Gruppe bestehend aus: *Lactococcus lactis* Subspezies *lactis, Lactococcus lactis* Subspezies *diacetylactis, Lactococcus lactis* Subspezies *cremoris* und Kombinationen davon.

5. Teilfermentierte pasteurisierte Milch in flüssiger Form nach einem der Ansprüche 1 bis 4, wobei die Hefen ausgewählt sind aus der Gruppe bestehend aus: *Kluyveromyces marxianus* Subspezies *marxianus, Debaryomyces hansenii, Candida colliculosa, Kluyveromyces lactis, Saccharomyces cerevisiae.*

6. Verwendung der teilfermentierten Milch nach einem der Ansprüche 1 bis 5 als Aromagemisch, wobei:
i) das industrielle Verfahren zur Herstellung von Mozzarella umfasst:
• Zugeben des Aromagemischs zu pasteurisierter Milch, die für die Herstellung von Mozzarella bestimmt ist, in Mengen zwischen 1 und 3 % Gesamtvolumenanteil der pasteurisierten Milch, vor der Bildung des Käsebruchs,
• Bilden von Käsebruch mit mikrobiellem Lab oder Kälberlab und nach einem der folgenden zwei alternativen Verfahren:
A) durch Milchsäuregärung, unterstützt durch *Streptococcus thermophilus,* der als Starterkultur zugesetzt wird, oder
B) auf chemisch enzymatische Weise durch Zitronensäure,
wobei der Starter von Verfahren A) oder die Zitronensäure von Verfahren B) der Milch vorher oder gleichzeitig zur Zugabe des Aromagemischs zugegeben wird,
ii) wobei der mit dem industriellen Verfahren gewonnene Mozzarella:
I) zum Zeitpunkt t=0 und zum Verfallsdatum ein Vorhandensein von Hefen unter 100 Kubikfuß (cfu)/g von Mozzarella aufweist;
II) einen Geschmack ähnlich dem handwerklichen Typ aufweist, wenn das industrielle Verfahren die Bildung von Käsebruch gemäß der Milchsäuregärung A) beinhaltet, einen Geschmack ähnlich dem industriellen Mozzarella aufweist, der durch Milchsäuregärung gewonnen wird, wenn die Bildung von Käsebruch auf chemischenzymatische Weise B) erfolgt.

7. Verwendung nach Anspruch 6, wobei, wenn der Käsebruch durch Milchsäuregärung A) gewonnen wird, das Verfahren zur Herstellung von Mozzarella die folgenden Schritte umfasst:
a) Zugeben des Aromagemischs zu pasteurisierter Milch, die für die Herstellung von Mozzarella bestimmt ist, wobei die Milch gegebenenfalls auf ihr eigenes Fett-/Proteinverhältnis gemäß der den Fachleuten auf diesem Gebiet bekannten guten Milchpraxis standardisiert ist und ihr zuvor eine *Streptococcus thermophilus-*Starterkultur zugegeben wurde,
b) Bildung von Käsebruch durch Zugeben von Kälberlab oder mikrobiellem Lab,
c) Schneiden des so gewonnenen Käsebruchs, Rühren, partielle oder vollständige Entwässerung der Molke und Trennung des Käsebruchs,
d) Reifung des Käsebruchs durch fermentative Versauerung bis zum gewünschten pH-Wert, der in der Regel zwischen 5,2 und 5,4 liegt,
e) Schneiden des gereiften Käsebruchs in kleine Stücke
f) Strecken des Käsebruchs in heißem Wasser oder auch unter Dampf,
g) Formen des so gewonnenen gestreckten Käsebruchs zu Mozzarellas von bestimmter Form,
h) Kühlung der Mozzarellas,
i) gegebenenfalls Salzen durch Eintauchen in Käsesole,
j) Verpacken, in der Regel, jedoch nicht zwingend, in Lagerungsflüssigkeit.

8. Verwendung nach Anspruch 7, wobei in Schritt (a) das Aromagemisch in Konzentrationen zwischen 1,2 und 1,6 Gew.-% des Gesamtvolumenanteils von für die Herstellung von Mozzarella bestimmter pasteurisierter Milch zugegeben wird.

9. Verwendung nach Anspruch 6, wobei, wenn der Käsebruch auf chemischenzymatische Weise B) gewonnen wird, das Verfahren zur Herstellung von Mozzarella die folgenden Schritte umfasst:
a') Zugeben des Aromagemischs zu pasteurisierter Milch, wobei die Milch gegebenenfalls auf ihr eigenes Fett-/Proteinverhältnis gemäß der guten Milchpraxis standardisiert ist, die den Fachleuten auf diesem Gebiet bekannt ist, und zuvor hinzugefügte Zitronensäure enthält;
b') Bilden von Käsebruch durch Zugeben von Kälberlab oder mikrobiellem Lab;
c') Schneiden des so gewonnenen Käsebruchs, Rühren, vollständige Entwässerung der Molke und Trennung des Käsebruchs;
d') Schneiden des gereiften Käsebruchs in kleine Stücke;
e') Strecken des Käsebruchs in heißem Wasser oder auch unter Dampf;
f) Formen des so gewonnenen gestreckten Käsebruchs zu Mozzarellas bestimmter Form;
g') Kühlung der Mozzarellas;
h') gegebenenfalls Salzen durch Eintauchen in Käsesole;
i') Verpacken, in der Regel, jedoch nicht zwingend, in Lagerungsflüssigkeit.

## Revendications

1. Lait pasteurisé partiellement fermenté sous forme liquide obtenu par ajout d'une association de bactéries d'acide lactique sélectionnées parmi les lactocoques et/ou les lactobacilles mésophiles dans des quantités comprises entre 5 milliards et 100 milliards d'unités formatrices de colonies (ufc)/50 litres de lait pasteurisé, et des levures dans des quantités comprises entre 20 millions et 3,2 milliards/50 litres de lait pasteurisé qui sont mises en culture jusqu'à ce que des valeurs de pH comprises entre 5,80 et 6,10 soient atteintes.

2. Lait pasteurisé partiellement fermenté sous forme liquide selon la revendication 1, dans lequel ledit pH est compris entre 6,00 et 6,10.

3. Lait pasteurisé partiellement fermenté sous forme liquide selon l'une quelconque des revendications 1 et 2, dans lequel les lactobacilles mésophiles sont sélectionnés parmi le groupe constitué par *Lactobacillus plantarum ; Lactobacillus casei; Lactobacillus rhamnosus ; Lactobacillus pentosus ; Lactobacillus paracasei* et leurs combinaisons.

4. Lait pasteurisé partiellement fermenté sous forme liquide selon l'une quelconque des revendications 1 et 2, dans lequel les lactocoques mésophiles sont sélectionnés parmi le groupe constitué par : *Lactococcus lactis* subsp. *lactis ; Lactococcus lactis* subsp. *diacetylactis ; Lactococcus lactis* subsp. *cremoris ;* et leurs combinaisons.

5. Lait pasteurisé partiellement fermenté sous forme liquide selon l'une quelconque des revendications 1 à 4, dans lequel les levures sont sélectionnés parmi le groupe constitué par : *Kluyveromyces marxianus* subsp. *marxianus ; Debaryomyces hansenii ; Candida colliculosa ; Kluyveromyces lactis ; Saccharomyces cerevisiae.*

6. Utilisation du lait partiellement fermenté défini selon l'une quelconque des revendications 1 à 6, en tant que mélange aromatisant, dans lequel :
i) ledit processus industriel de préparation de mozzarella comprend :
• ajouter ledit mélange aromatisant dans du lait pasteurisé destiné à la production de mozzarella, dans des quantités comprises entre 1 et 3 % en poids sur le volume total dudit lait pasteurisé, avant de former le caillé,
• former un caillé avec de la présure microbienne ou de veau et selon l'une des 2 méthodes alternatives suivantes :
A) par fermentation lactique à l'aide de
*Streptococcus thermophilus*, ajoutée comme culture de levain ou
B) par voie chimio-enzymatique à l'aide d'acide citrique,
dans lequel ledit levain de la méthode A) ou l'acide citrique de la méthode B) étant ajoutés dans ledit lait avant ou simultanément avec l'ajout dudit mélange aromatisant,
ii) ledit mozzarella obtenue à l'aide dudit processus industriel :
I) ayant au temps t = 0 et à la date de péremption une présence de levures inférieure à 100 ufc/g de mozzarella ;
II) présentant un goût similaire à celle du type artisanal lorsque ledit processus industriel implique la formation du caillé par la fermentation lactique A), et présentant un goût similaire à la mozzarella industrielle obtenue par fermentation lactique lorsque la formation du caillé se produit par voie chimio-enzymatique B).

7. Utilisation selon la revendication 6, dans laquelle, lorsque le caillé est obtenu par la fermentation lactique A), le processus de préparation de mozzarella comprend les étapes suivantes:
a) ajouter le mélange aromatisant dans du lait pasteurisé destiné à la production de mozzarella, ledit lait étant
facultativement standardisé dans son propre rapport graisses/protéines selon les bonnes pratiques de la production laitière bien connues des spécialistes du domaine, et ayant une culture de levain de *Streptococcus thermophilus* précédemment ajoutée à celui-ci ;
b) former un caillé en ajoutant de la présure de veau ou microbienne ;
c) découper le caillé ainsi obtenu, agiter, drainer partiellement ou totalement le petit lait et séparer le caillé ;
d) affiner le caillé, par acidification fermentative jusqu'au pH souhaité généralement compris entre 5,2 et 5,4 ;
e) découper le caillé affiné en petits morceaux ;
f) étirer le caillé dans de l'eau chaude ou également sous vapeur ;
g) mettre en forme le caillé étiré ainsi obtenu en mozzarellas de forme spécifique ;
h) refroidir les mozzarellas ;
i) saler facultativement en les plongeant dans de la saumure;
j) emballer, généralement mais pas nécessairement, dans un liquide de stockage.

8. Utilisation selon la revendication 7, dans laquelle dans l'étape (a), le mélange aromatisant est ajouté à des concentrations comprises entre 1,2 et 1,6 % en poids/volume total du lait pasteurisé destiné à la production de mozzarella.

9. Utilisation selon la revendication 6, dans laquelle, lorsque le caillé est obtenu par voie chimio-enzymatique B), le processus de préparation de mozzarella comprend les étapes suivantes:
a') ajouter le mélange aromatisant dans du lait pasteurisé, ledit lait étant facultativement standardisé dans son propre rapport graisses/protéines selon les bonnes pratiques de la production laitière bien connues des spécialistes du domaine et ayant de l'acide citrique précédemment ajouté à celui-ci ;
b') former un caillé en ajoutant de la présure de veau ou microbienne ;
c') découper le caillé ainsi obtenu, agiter, drainer totalement le petit lait et séparer le caillé ; d') découper le caillé affiné en petits morceaux ;
e') étirer le caillé dans de l'eau chaude ou également sous vapeur ;
f') mettre en forme le caillé étiré ainsi obtenu en mozzarellas de forme spécifique ;
g') refroidir les mozzarellas ;
h') saler facultativement en les plongeant dans de la saumure ;
i') emballer, généralement mais pas nécessairement, dans un liquide de stockage.
